# EUROPEAN PATENT APPLICATION

(11) **EP 3 664 564 A1**
(43) Date of publication of application: **10.06.2020**
(21) Application number: 18841662.2
(22) Date of filing: 27.07.2018
(51) Int. Cl.: H04W 74/08

(54) **RANDOM ACCESS METHOD AND USER TERMINAL**

(30) Priority: 02.08.2017 CN 201710651891
(71) Applicant: Vivo Mobile Communication Co., Ltd., Dongguan, Guangdong 523860 (CN)
(72) Inventor: WU, Yumin, Dongguan Guangdong 523860 (CN)
(74) Representative: Winter, Brandl, Fürniss, Hübner, Röss, Kaiser, Polte - Partnerschaft mbB
(86) International application number: PCT/CN2018/097488
(87) International publication number: WO 2019/024791

(57) **Abstract**

A random access method and a user terminal are provided. The random access method includes: selecting a downlink receiving beam for random access according to a downlink receiving beam selecting rule; determining an uplink random access resource according to the downlink receiving beam, and sending a random access signal on the uplink random access resource.

## Description

### CROSS REFERENCE OF RELATED APPLICATION

The present application claims a priority of Chinese patent application No. 201710651891.0 filed on August 2, 2017, which is incorporated herein by reference in its entirety.

### TECHNICAL FIELD

The present disclosure relates to the field of communications technologies, and in particular, to a random access method and a user terminal.

### BACKGROUND

### 1) Beam scan:

In the uplink multi-antenna system, in order to obtain a larger transmission signal coverage distance, the transmitting side may use a concentrated beam to transmit the channel. However, because the beam coverage is narrow, in order to obtain a better coverage area, the transmitting end may control to send beams in different directions at different times to achieve better coverage and coverage distance.

### 2) 5G (fifth generation mobile communication technology) random access process:

Because the network side sends downlink signals by means of beam scanning, when the user terminal initiates an uplink random access process, the network will configure the terminal with uplink random access resources (i.e., Physical Random Access Channel (PRACH)) corresponding to each downlink receiving beam, and the signals corresponding to the downlink receiving beam include a Channel State Information Reference Signal (CSI-RS) block and a Synchronous Signal Block.

After the user terminal selects a corresponding downlink receiving beam, it sends msg1 (i.e., PRACH) on the downlink receiving beam corresponding to the uplink random access resource. After receiving the msg1 of the user terminal (UE), the network side sends msg2 on the downlink receiving beam corresponding to the random access resource.

There is a method in which a user terminal selects a downlink receiving beam with the best signal quality, and sends the msg1 corresponding to the uplink random access resource in the downlink receiving beam.

Because different beams may correspond to different signals (such as channel state information reference signal blocks or synchronous signal blocks), the quality of different channels cannot be directly compared with each other, and different types of measurement results (such as Reference Symbol Received Power and Reference Signal Received Quality) cannot be directly compared with each other, so it is required to consider how to choose the best downlink receiving beam in this case, so as to send msg1 in the downlink receiving beam corresponding to the random access resource.

### SUMMARY

A random access method and a user terminal are provided in the embodiments of the present disclosure, to solve the technical issue that the best downlink receiving beam may not be selected when the signal types of the downlink receiving beams are different and the types of the signal measurement results of the downlink receiving beam are different.

In a first aspect, a random access method is provided in the present disclosure, including:
selecting a downlink receiving beam for random access according to a downlink receiving beam selecting rule;
determining an uplink random access resource according to the downlink receiving beam, and sending a random access signal on the uplink random access resource.

In a second aspect, a user terminal is provided in the present disclosure, including:
a selecting module, configured to select a downlink receiving beam for random access according to a downlink receiving beam selecting rule;
a receiving module, configured to determine an uplink random access resource according to the downlink receiving beam, and send a random access signal on the uplink random access resource.

In a third aspect, a user terminal is provided in the present disclosure, including: a processor, a memory and a random access method program stored in the memory and executable on the processor, where the random access method program is executed by the processor to perform the random access method hereinabove.

In a fourth aspect, a computer-readable storage medium is provided in the present disclosure, where a random access method program is stored in the computer-readable storage medium, and the random access method program is executed by a processor to perform the random access method hereinabove.

### BRIEF DESCRIPTION OF THE DRAWINGS

Various other advantages and benefits will become apparent to those of ordinary skill in the art upon reading the detailed description of the embodiments below. The drawings are only for the purpose of illustrating the embodiments.
FIG. 1 is a flowchart of a random access method in the embodiments of the present disclosure;
FIG.2 is a first schematic view of a user terminal in the embodiments of the present disclosure; and
FIG.3 is a second schematic view of a user terminal in the embodiments of the present disclosure.

### DETAILED DESCRIPTION

In order to make the object, technical solution and advantages of the present disclosure more clearly, the present disclosure will be further described in detail below with reference to the drawings and embodiments. It should be understood that the embodiments described herein are merely illustrative and are not intended to limit the disclosure.

The terms "comprises" and "comprising" and the variants thereof are intended to cover a non-exclusive inclusion, for example, a process, method, system, product, or device that comprises a series of steps or units is not necessarily limited to those steps or units explicitly listed, but may include the steps or unit that are not explicitly listed or inherent to such processes, methods, products or devices.

In the embodiment of the present disclosure, the network side may refer to a base station, and the base station may be a Global System of Mobile communication (GSM) or a Base Transceiver Station (BTS) in Code Division Multiple Access (CDMA), or a NodeB (NB) in Wideband Code Division Multiple Access (WCDMA), or an Evolutionary Node B (eNB, or eNodeB) in LTE, or a base station in a new radio access technology (New RAT or NR), or a relay station or access point, or a base station in a future 5G network, etc., which is not limited herein.

In the embodiment of the present disclosure, the user terminal (UE) may be a wireless terminal or a wired terminal. The wireless terminal may be a device that provides voice and/or other business data connectivity to the user, and a handheld device with a wireless connection function, or other processing equipment connected to the wireless modem. A wireless terminal can communicate with one or more core networks via a Radio Access Network (RAN). The wireless terminal can be a mobile terminal, such as a mobile phone (or a "cellular" phone) and a computer with a mobile terminal. For example, it can be a portable, compact, handheld, computer-built or vehicle-mounted mobile device that exchanges language and/or data with a wireless access network. For example, Personal Communication Service (PCS) phones, cordless phones, Session Initiation Protocol (SIP) phones, Wireless Local Loop (WLL) stations, Personal Digital Assistant (PDA)) and other equipment. A wireless terminal may also be referred to as a system, a subscriber unit, a subscriber station, a mobile station, a mobile station, a mobile station, a remote station, a remote terminal, an access terminal, a User Terminal), a User Agent), a User Device or User Equipment), which are not limited herein.

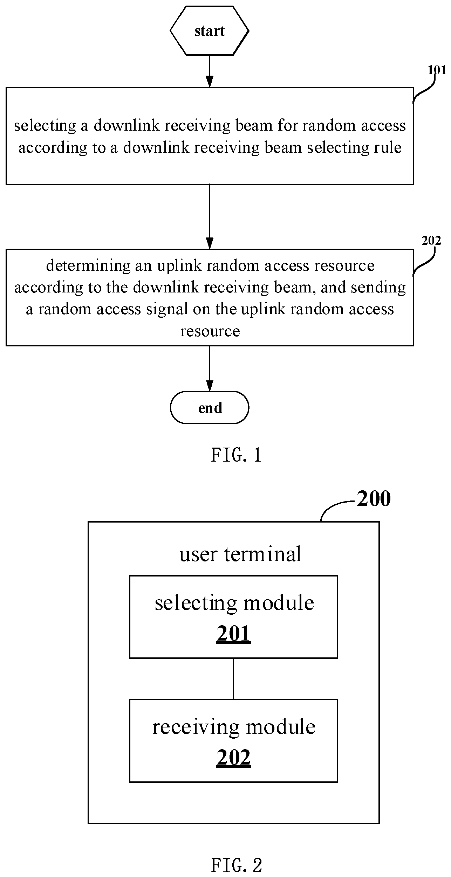

Referring to FIG. 1 which is a flowchart of a random access method in the embodiments of the present disclosure, the method is executed by a UE and includes:
Step 101: selecting a downlink receiving beam for random access according to a downlink receiving beam selecting rule.

Optionally, the downlink receiving beam selecting rule is configured by a network side (e.g., base station) or defined by a protocol, which is not limited herein.

Optionally, the downlink receiving beam selecting rule includes any one or a combination of:
a type of a measurement result to compare a signal quality;
selecting a beam with a best signal quality in the configured downlink receiving beam(s) according to the result reported through a measurement;
selecting a beam with a best signal quality in the configured downlink receiving beam(s) according to the measurement result(s) measured by a user terminal.

The measurement result measured by the user terminal may be a measurement result of a signal measured by the user terminal which is not reported to the network side.

Further, optionally, the type of the measurement result to compare the signal quality includes any one or a combination of:
reference symbol received power of all measurement results;
reference signal received qualities of all measurement results;
reference symbol received power of a synchronous signal block (SS block);
a reference signal received quality of a synchronous signal block;
reference symbol received power of a channel state information reference signal block (CSI-RS block); and
a reference signal received quality of a channel state information reference signal block.

Step 102: determining an uplink random access resource according to the downlink receiving beam, and sending a random access signal on the uplink random access resource.

Optionally, in the embodiments of the present disclosure, the downlink receiving beam for random access may be selected by any one or a combination of the following ways:
Manner 1: in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the result reported through the measurement report;
Manner 2: in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the result reported through the measurement report;
Manner 3: in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the result reported through the measurement report;
Manner 4: in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the result reported through the measurement report;
Manner 5: in the case that the downlink receiving beam selecting rule includes the measurement result measured by the user terminal, selecting the beam with the best signal quality in the configured downlink receiving beam, and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the measurement result measured by the user terminal;
Manner 6: in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the measurement result(s) measured by the user terminal;
Manner 7: in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the measurement result measured by the user terminal;
Manner 8: in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the measurement result measured by the user terminal;
Manner 9: in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the result reported through the measurement report and the measurement result measured by the user terminal;
Manner 10: in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the result reported through the measurement report and the measurement result measured by the user terminal;
Manner 11: in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the result reported through the measurement report and the measurement result measured by the user terminal;
Manner 12: in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the result reported through the measurement report and the measurement result measured by the user terminal.

Optionally, in the embodiments of the present disclosure, the uplink random access resource may be determined by any one of the following ways:
Manner 1: in the case that one downlink receiving beam is selected in the above Step 101, selecting a latest random access resource from random access resources corresponding to the downlink receiving beam to start to send a random access signal;
Manner 2: in the case that two downlink receiving beams are selected in the above Step 101, the sending the random access signal (e.g., RPACH) on the uplink random access resource includes any one of:
   selecting a latest random access resource from all uplink random access resources corresponding to the selected downlink receiving beams in the above Step 101 to start to send a random access signal;
   selecting all detected downlink receiving beams from the selected downlink receiving beams in the above Step 101, and selecting a latest random access resource from all uplink random access resources corresponding to all the detected downlink receiving beams to start to send a random access signal;
   selecting a first detected downlink receiving beam from the selected downlink receiving beams in the above Step 101, and selecting a latest random access resource from all uplink random access resources corresponding to the first detected downlink receiving beam to start to send a random access signal;
   selecting, for a Random Access Channel (RACH) procedure of sending repetitive Physical Random Access Channels (PRACHs), the downlink receiving beam with a shortest repetition time interval from the selected downlink receiving beams in the above Step 101, and selecting a latest random access resource from all uplink random access resources corresponding to the downlink receiving beam to start to send a random access signal;
   selecting, for a RACH procedure of sending repetitive PRACHs, the downlink receiving beam with a shortest total PRACH transmitting time length from the selected downlink receiving beams in the above Step 101, and selecting a latest random access resource from all uplink random access resources corresponding to the downlink receiving beam to start to send a random access signal;
   for a RACH procedure of sending repetitive PRACHs, selecting all detected downlink receiving beams from the selected downlink receiving beams in the above Step 101, and further selecting the downlink receiving beam with a shortest repetition time interval from the detected downlink receiving beams, and selecting a latest random access resource from all uplink random access resources corresponding to the downlink receiving beam to start to send a random access signal; and
   for a RACH procedure of sending repetitive PRACHs, selecting all detected downlink receiving beams from the selected downlink receiving beams in the above Step 101, and further selecting the downlink receiving beam with a shortest total PRACH transmitting time length from the detected downlink receiving beams, and selecting a latest random access resource from all uplink random access resources corresponding to the downlink receiving beam to start to send a random access signal.

In this way, when the signal types of the downlink receiving beams are different and the types of the signal measurement results of the downlink receiving beam are different, the terminal is able to select a best downlink receiving beam and send a PRACH signal on the random access resource corresponding to the downlink receiving beam, thereby being able to initiate a random access procedure on a better beam.

A user terminal is also provided in the embodiment of the present disclosure. Since the principle of solving the issue of the user terminal is similar to the measurement method in the embodiment of the present disclosure, the method embodiments may be made a reference for the embodiments of the user terminal.

Referring to FIG.2 which is a schematic view of a user terminal in the embodiments of the present disclosure, the user terminal 200 includes:
a selecting module 201, configured to select a downlink receiving beam for random access according to a downlink receiving beam selecting rule;
a receiving module 202, configured to determine an uplink random access resource according to the downlink receiving beam, and send a random access signal on the uplink random access resource.

Optionally, the downlink receiving beam selecting rule is configured by a network side or defined by a protocol.

Optionally, the downlink receiving beam selecting rule includes any one or a combination of:
a type of a measurement result to compare a signal quality;
selecting a beam with a best signal quality in the configured downlink receiving beam(s) according to a result reported through a measurement;
selecting a beam with a best signal quality in the configured downlink receiving beam(s) according to the measurement result(s) measured by a user terminal.

Optionally, the type of the measurement result to compare the signal quality includes any one or a combination of:
reference symbol received power of all measurement results;
reference signal received qualities of all measurement results;
reference symbol received power of a synchronous signal block;
a reference signal received quality of a synchronous signal block;
reference symbol received power of a channel state information reference signal block; and
a reference signal received quality of a channel state information reference signal block.

Optionally, the selecting module 201 is further configured to select the downlink receiving beam by any one or a combination of:
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the result reported through the measurement report;
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the result reported through the measurement report;
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the result reported through the measurement report;
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the result reported through the measurement report.

Optionally, the selecting module 201 is further configured to select the downlink receiving beam by any one or a combination of:
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the measurement result measured by the user terminal;
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the measurement result measured by the user terminal;
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the measurement result measured by the user terminal;
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the measurement result measured by the user terminal.

Optionally, the selecting module 201 is further configured to select the downlink receiving beam by any one or a combination of:
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the result reported through the measurement report and the measurement result measured by the user terminal;
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the result reported through the measurement report and the measurement result measured by the user terminal;
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the result reported through the measurement report and the measurement result measured by the user terminal;
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the result reported through the measurement report and the measurement result measured by the user terminal.

Optionally, the determining module 202 is further configured to:
in the case that one downlink receiving beam is selected, select a latest random access resource from random access resources corresponding to the downlink receiving beam to start to send a random access signal; or
in the case that two downlink receiving beams are selected, the sending the random access signal on the uplink random access resource includes any one of:
   selecting a latest random access resource from all uplink random access resources corresponding to the selected downlink receiving beams to start to send a random access signal;
   selecting all detected downlink receiving beams from the selected downlink receiving beams, and selecting a latest random access resource from all uplink random access resources corresponding to all the detected downlink receiving beams to start to send a random access signal;
   selecting a first detected downlink receiving beam from the selected downlink receiving beams, and selecting a latest random access resource from all uplink random access resources corresponding to the first detected downlink receiving beam to start to send a random access signal;
   selecting, for a Random Access Channel (RACH) procedure of sending repetitive Physical Random Access Channels (PRACHs), the downlink receiving beam with a shortest repetition time interval from the selected downlink receiving beams, and selecting a latest random access resource from all uplink random access resources corresponding to the downlink receiving beam to start to send a random access signal;
   selecting, for a RACH procedure of sending repetitive PRACHs, the downlink receiving beam with a shortest total PRACH transmitting time length from the selected downlink receiving beams, and selecting a latest random access resource from all uplink random access resources corresponding to the downlink receiving beam to start to send a random access signal;
   for a RACH procedure of sending repetitive PRACHs, selecting all detected downlink receiving beams from the selected downlink receiving beams, and further selecting the downlink receiving beam with a shortest repetition time interval from the detected downlink receiving beams, and selecting a latest random access resource from all uplink random access resources corresponding to the downlink receiving beam to start to send a random access signal; and
   for a RACH procedure of sending repetitive PRACHs, selecting all detected downlink receiving beams from the selected downlink receiving beams, and further selecting the downlink receiving beam with a shortest total PRACH transmitting time length from the detected downlink receiving beams, and selecting a latest random access resource from all uplink random access resources corresponding to the downlink receiving beam to start to send a random access signal.

The user terminal in the embodiments of the present disclosure is able to perform the foregoing method embodiments, and its implementation principles and technical effects are similar, the details thereof are omitted herein.

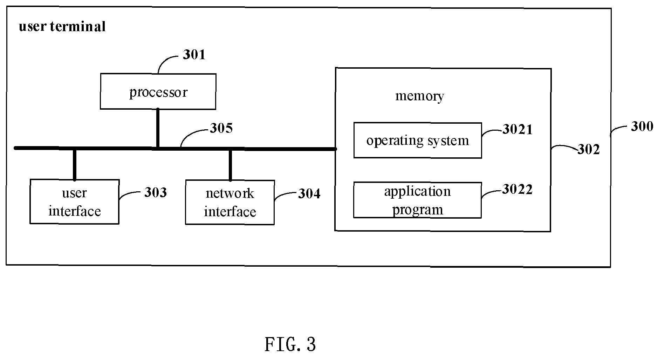

FIG.3 is a schematic view of a user terminal in another embodiment of the present disclosure. As shown in FIG.3, the user terminal 300 shown in FIG.3 includes: at least one processor 301, memory 302, at least one network interface 304, and user interface 303. The various components in the terminal 300 are coupled together through a bus system 305. It can be understood that the bus system 305 is configured to implement connection and communication between these components. The bus system 305 includes a power bus, a control bus, and a status signal bus in addition to the data bus. However, for the sake of clarity, various buses are labeled as the bus system 305 in FIG.3.

The user interface 303 may include a display, a keyboard, or a pointing device (for example, a mouse, a trackball, a touch panel, or a touch screen).

It can be understood that the memory 302 in the embodiment of the present disclosure may be a volatile memory or a non-volatile memory, or may include both volatile and non-volatile memories. The non-volatile memory may be a read-only memory (ROM), a programmable read-only memory (PROM), an erasable programmable read-only memory (EROM), or Erase programmable EPROM (EEPROM) or flash memory. The volatile memory may be a Random Access Memory (RAM), which is used as an external cache. By way of example, but not limitation, many forms of RAM are available, such as Static Random Access Memory (SRAM), a Dynamic Random Access Memory (DRAM), a Synchronous Dynamic Random Access Memory (SDRAM), a double data rate synchronous dynamic random access memory (DDRSDRAM), an enhanced synchronous dynamic random access memory (ESDRAM), a synchronous connection dynamic random access memory (SLDRAM), and a Direct memory bus random access memory (DRRAM). The memory 302 of the systems and methods described in embodiments of the present disclosure is intended to include, but is not limited to, these and any other suitable types of memory.

In some implementations, the memory 302 stores the following elements, executable modules or data structures, or a subset of them, or their extended set: an operating system 3021 and an application program 3022.

The operating system 3021 includes various system programs, such as a framework layer, a core library layer, and a driver layer, etc., and is configured to implement various basic services and process hardware-based tasks. The application program 3022 includes various application programs, such as a Media Player and a Browser, and is configured to implement various application services. A program for implementing the method of the embodiment of the present disclosure may be included in an application program 3022.

In the embodiment of the present disclosure, the program or instructions stored in the memory 302 are called. Specifically, the programs or instructions stored in the application program 3022 may be executed by the processor 301 to: select a downlink receiving beam for random access according to a downlink receiving beam selecting rule, determine an uplink random access resource according to the downlink receiving beam, and send a random access signal on the uplink random access resource.

The method disclosed in the foregoing embodiment of the present disclosure may be applied to the processor 301, or implemented by the processor 301. The processor 301 may be an integrated circuit chip and has a signal processing capability. In the implementation process, each step of the above method may be completed by using an integrated logic circuit of hardware in the processor 301 or an instruction in the form of software. The processor 301 may be a general-purpose processor, a digital signal processor (DSP), an application specific integrated circuit (ASIC), a Field Programmable Gate Array (FPGA), or other programmable logic devices, discrete gate or transistor logic devices, discrete hardware components. Various methods, steps, and logical block diagrams disclosed in the embodiments of the present disclosure may be implemented or executed. A general-purpose processor may be a microprocessor or the processor may be any conventional processor or the like. The steps of the method disclosed in combination with the embodiments of the present disclosure may be directly implemented by a hardware decoding processor, or may be performed by using a combination of hardware and software modules in the decoding processor. The software module may be located in a mature storage medium such as a random access memory, a flash memory, a read-only memory, a programmable read-only memory, or an electrically erasable programmable memory, a register, and the like. The storage medium is located in the memory 302, and the processor 301 reads the information in the memory 302 and completes the steps of the foregoing method in combination with its hardware.

It can be understood that the embodiments described in the embodiments of the present disclosure may be implemented by hardware, software, firmware, middleware, microcode, or a combination thereof. For hardware implementation, the processing unit can be implemented in one or more Application Specific Integrated Circuits (ASIC), Digital Signal Processing (DSP), Digital Signal Processing Equipment (DSPD) and Programmable Logic Device (PLD), Field-Programmable Gate Array (FPGA), general-purpose processor, controller, microcontroller, microprocessor, and other electronic units for performing the functions described in the present disclosure or a combination thereof.

For software implementation, the technology described in the embodiments of the present disclosure can be implemented by modules (such as procedures, functions, etc.) that perform the functions described in the embodiments of the present disclosure. Software code can be stored in a memory and executed by a processor. The memory may be implemented in the processor or external to the processor.

Optionally, the computer program is executed by the processor 301 to perform:
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the result reported through the measurement report;
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the result reported through the measurement report;
in the case that the downlink receiving beam selecting rule includes the result reported through the measurement report, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the result reported through the measurement report;
in the case that the downlink receiving beam selecting rule includes the result reported through the measurement report, selecting the beam with the best signal quality in the configured downlink receiving beam, and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the result reported through the measurement report.

Optionally, the computer program is executed by the processor 301 to perform:
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the measurement result measured by the user terminal;
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the measurement result measured by the user terminal;
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with a best reference symbol received power of the channel state information reference signal block in the measurement result measured by the user terminal;
in the case that the downlink receiving beam selecting rule includes the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the measurement result measured by the user terminal.

Optionally, the computer program is executed by the processor 301 to perform:
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the synchronous signal block, the downlink receiving beam including a downlink receiving beam with best reference symbol received power of the synchronous signal block in the result reported through the measurement report and the measurement result measured by the user terminal;
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the synchronous signal block, the downlink receiving beam including a downlink receiving beam with a best reference signal received quality of the synchronous signal block in the result reported through the measurement report and the measurement result measured by the user terminal;
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference symbol received power of the channel state information reference signal block, the downlink receiving beam including a downlink receiving beam with best reference symbol received power of the channel state information reference signal block in the result reported through the measurement report and the measurement result measured by the user terminal;
in the case that the downlink receiving beam selecting rule includes the result reported through the measurement report and the measurement result measured by the user terminal, selecting the beam with the best signal quality in the configured downlink receiving beam(s), and in the case that the type of the measurement result to compare the signal quality in the downlink receiving beam selecting rule includes the reference signal received quality of the channel state information reference signal block, the downlink receiving beam including a downlink receiving beam with a best reference signal received quality of the channel state information reference signal block in the result reported through the measurement report and the measurement result measured by the user terminal.

Optionally, the computer program is executed by the processor 301 to perform:
in the case that one downlink receiving beam is selected, selecting a latest random access resource from random access resources corresponding to the downlink receiving beam to start to send a random access signal; or
in the case that two downlink receiving beams are selected, the sending the random access signal on the uplink random access resource includes any one of:
   selecting a latest random access resource from all uplink random access resources corresponding to the selected downlink receiving beams to start to send a random access signal;
   selecting all detected downlink receiving beams from the selected downlink receiving beams, and selecting a latest random access resource from all uplink random access resources corresponding to all the detected downlink receiving beams to start to send a random access signal;
   selecting a first detected downlink receiving beam from the selected downlink receiving beams, and selecting a latest random access resource from all uplink random access resources corresponding to the first detected downlink receiving beam to start to send a random access signal;
   selecting, for a Random Access Channel (RACH) procedure of sending repetitive Physical Random Access Channels (PRACHs), the downlink receiving beam with a shortest repetition time interval from the selected downlink receiving beams, and selecting a latest random access resource from all uplink random access resources corresponding to the downlink receiving beam to start to send a random access signal;
   selecting, for a RACH procedure of sending repetitive PRACHs, the downlink receiving beam with a shortest total PRACH transmitting time length from the selected downlink receiving beams, and selecting a latest random access resource from all uplink random access resources corresponding to the downlink receiving beam to start to send a random access signal;
   for a RACH procedure of sending repetitive PRACHs, selecting all detected downlink receiving beams from the selected downlink receiving beams, and further selecting the downlink receiving beam with a shortest repetition time interval from the detected downlink receiving beams, and selecting a latest random access resource from all uplink random access resources corresponding to the downlink receiving beam to start to send a random access signal; and
   for a RACH procedure of sending repetitive PRACHs, selecting all detected downlink receiving beams from the selected downlink receiving beams, and further selecting the downlink receiving beam with a shortest total PRACH transmitting time length from the detected downlink receiving beams, and selecting a latest random access resource from all uplink random access resources corresponding to the downlink receiving beam to start to send a random access signal.

A computer-readable storage medium is further provided in the present disclosure, where a random access method program is stored in the computer-readable storage medium, and the random access method program is executed by a processor to perform the random access method hereinabove.

Those of ordinary skill in the art may realize that the units and algorithm steps of each example described in combination with the embodiments disclosed herein can be implemented by electronic hardware, or a combination of computer software and electronic hardware. Whether these functions are performed in hardware or software depends on the specific application and design constraints of the technical solution. A person skilled in the art can use different methods to implement the described functions for each specific application, but such implementation should not be considered to be beyond the scope of the present disclosure.

Those skilled in the art can clearly understand that, for the convenience and brevity of description, the specific working processes of the systems, devices, and units described above can refer to the corresponding processes in the foregoing method embodiments, and which are not repeated herein.

In the embodiments provided in this application, it should be understood that the disclosed apparatus and method may be implemented in other ways. For example, the device embodiments described above are only schematic. For example, the division of the unit is only a logical function division. In actual implementation, there may be another division manner. For example, at least two units or components may be combined or integrated into another system, or some features can be ignored or not implemented. In addition, the displayed or discussed mutual coupling or direct coupling or communication connection may be indirect coupling or communication connection through some interfaces, devices or units, which may be electrical, mechanical or other forms.

The units described as separate components may or may not be physically separated, and the components displayed as units may or may not be physical units, which may be located in one place, or may be distributed on at least two network units.. Some or all of the units may be selected according to actual needs to achieve the objectives of the solutions of the embodiments of the present disclosure.

In addition, each functional unit in each embodiment of the present disclosure may be integrated into one processing unit, or each unit may exist separately physically, or two or more units may be integrated into one unit.

If the functions are implemented in the form of software functional units and sold or used as independent products, they can be stored in a computer-readable storage medium. Based on this understanding, the technical solution of the present disclosure is essentially a part that contributes to the existing technology or a part of the technical solution can be embodied in the form of a software product. The computer software product is stored in a storage medium, including several instructions are configured to cause a computer device (which may be a personal computer, a server, or a network device, etc.) to perform all or part of the steps of the method described in various embodiments of the present disclosure. The foregoing storage media include: various media that can store program codes, such as a U disk, a mobile hard disk, a ROM, a RAM, a magnetic disk, or an optical disc.

The above are only some embodiments of the present disclosure, and it should be noted that those skilled in the art may also make several improvements and refinements without departing from the principles of the present disclosure, which should also be considered as the scope of the present disclosure. Therefore, the scope of the present disclosure should be determined by the scope of the claims.

## Claims

1. A random access method, comprising:
selecting a downlink receiving beam for random access according to a downlink receiving beam selecting rule;
determining an uplink random access resource according to the downlink receiving beam, and sending a random access signal on the uplink random access resource.

2. The method according to claim 1, wherein the downlink receiving beam selecting rule is configured by a network side or defined by a protocol.

3. The method according to claim 1, wherein the downlink receiving beam selecting rule comprises any one or a combination of:
a type of a measurement result to compare a signal quality;
selecting a beam with a best signal quality in the configured downlink receiving beam(s), according to the result reported through a measurement report;
selecting a beam with a best signal quality in the configured downlink receiving beam(s), according to the measurement result(s) measured by a user terminal.

4. The method according to claim 3, wherein the type of the measurement result to compare the signal quality comprises any one or a combination of:
reference symbol received power of all measurement results;
reference signal received qualities of all measurement results;
reference symbol received power of synchronous signal block;
reference signal received quality of synchronous signal block;
reference symbol received power of channel state information reference signal block; and
reference signal received quality of channel state information reference signal block.

5. The method according to claim 4, wherein the selecting the downlink receiving beam for random access according to the downlink receiving beam selecting rule comprises any one or a combination of:
in the case that the downlink receiving beam selecting rule comprises the result reported through the measurement report, selecting the beam with the best signal quality in the configured downlink receiving beam(s), and in the case that the type of the measurement result to compare the signal quality in the downlink receiving beam selecting rule comprises the reference symbol received power of the synchronous signal block, the downlink receiving beam comprising a downlink receiving beam with best reference symbol received power of the synchronous signal block in the result reported through the measurement report;
in the case that the downlink receiving beam selecting rule comprises the result reported through the measurement report, selecting the beam with the best signal quality in the configured downlink receiving beam(s), and in the case that the type of the measurement result to compare the signal quality in the downlink receiving beam selecting rule comprises the reference signal received quality of the synchronous signal block, the downlink receiving beam comprising a downlink receiving beam with a best reference signal received quality of the synchronous signal block in the result reported through the measurement report;
in the case that the downlink receiving beam selecting rule comprises the result reported through the measurement report, selecting the beam with the best signal quality in the configured downlink receiving beam(s), and in the case that the type of the measurement result to compare the signal quality in the downlink receiving beam selecting rule comprises the reference symbol received power of the channel state information reference signal block, the downlink receiving beam comprising a downlink receiving beam with best reference symbol received power of the channel state information reference signal block in the result reported through the measurement report;
in the case that the downlink receiving beam selecting rule comprises the result reported through the measurement report, selecting the beam with the best signal quality in the configured downlink receiving beam(s), and in the case that the type of the measurement result to compare the signal quality in the downlink receiving beam selecting rule comprises the reference signal received quality of the channel state information reference signal block, the downlink receiving beam comprising a downlink receiving beam with a best reference signal received quality of the channel state information reference signal block in the result reported through the measurement report.

6. The method according to claim 4, wherein the selecting the downlink receiving beam for random access according to the downlink receiving beam selecting rule comprises any one or a combination of:
in the case that the downlink receiving beam selecting rule comprises the measurement result(s) measured by the user terminal, selecting the beam with the best signal quality in the configured downlink receiving beam(s), and in the case that the type of the measurement result to compare the signal quality in the downlink receiving beam selecting rule comprises the reference symbol received power of the synchronous signal block, the downlink receiving beam comprising a downlink receiving beam with best reference symbol received power of the synchronous signal block in the measurement result(s) measured by the user terminal;
in the case that the downlink receiving beam selecting rule comprises the measurement result(s) measured by the user terminal, selecting the beam with the best signal quality in the configured downlink receiving beam(s), and in the case that the type of the measurement result to compare the signal quality in the downlink receiving beam selecting rule comprises the reference signal received quality of the synchronous signal block, the downlink receiving beam comprising a downlink receiving beam with a best reference signal received quality of the synchronous signal block in the measurement result(s) measured by the user terminal;
in the case that the downlink receiving beam selecting rule comprises the measurement result(s) measured by the user terminal, selecting the beam with the best signal quality in the configured downlink receiving beam(s), and in the case that the type of the measurement result to compare the signal quality in the downlink receiving beam selecting rule comprises the reference symbol received power of the channel state information reference signal block, the downlink receiving beam comprising a downlink receiving beam with best reference symbol received power of the channel state information reference signal block in the measurement result(s) measured by the user terminal;
in the case that the downlink receiving beam selecting rule comprises the measurement result(s) measured by the user terminal, selecting the beam with the best signal quality in the configured downlink receiving beam(s), and in the case that the type of the measurement result to compare the signal quality in the downlink receiving beam selecting rule comprises the reference signal received quality of the channel state information reference signal block, the downlink receiving beam comprising a downlink receiving beam with a best reference signal received quality of the channel state information reference signal block in the measurement result(s) measured by the user terminal.

7. The method according to claim 4, wherein the selecting the downlink receiving beam for random access according to the downlink receiving beam selecting rule comprises any one or a combination of:
in the case that the downlink receiving beam selecting rule comprises the result reported through the measurement report and the measurement result(s) measured by the user terminal, selecting the beam with the best signal quality in the configured downlink receiving beam(s), and in the case that the type of the measurement result to compare the signal quality in the downlink receiving beam selecting rule comprises the reference symbol received power of the synchronous signal block, the downlink receiving beam comprising a downlink receiving beam with best reference symbol received power of the synchronous signal block in the result reported through the measurement report and the measurement result(s) measured by the user terminal;
in the case that the downlink receiving beam selecting rule comprises the result reported through the measurement report and the measurement result(s) measured by the user terminal, selecting the beam with the best signal quality in the configured downlink receiving beam(s), and in the case that the type of the measurement result to compare the signal quality in the downlink receiving beam selecting rule comprises the reference signal received quality of the synchronous signal block, the downlink receiving beam comprising a downlink receiving beam with a best reference signal received quality of the synchronous signal block in the result reported through the measurement report and the measurement result(s) measured by the user terminal;
in the case that the downlink receiving beam selecting rule comprises the result reported through the measurement report and the measurement result(s) measured by the user terminal, selecting the beam with the best signal quality in the configured downlink receiving beam(s), and in the case that the type of the measurement result to compare the signal quality in the downlink receiving beam selecting rule comprises the reference symbol received power of the channel state information reference signal block, the downlink receiving beam comprising a downlink receiving beam with best reference symbol received power of the channel state information reference signal block in the result reported through the measurement report and the measurement result(s) measured by the user terminal;
in the case that the downlink receiving beam selecting rule comprises the result reported through the measurement report and the measurement result(s) measured by the user terminal, selecting the beam with the best signal quality in the configured downlink receiving beam(s), and in the case that the type of the measurement result to compare the signal quality in the downlink receiving beam selecting rule comprises the reference signal received quality of the channel state information reference signal block, the downlink receiving beam comprising a downlink receiving beam with a best reference signal received quality of the channel state information reference signal block in the result reported through the measurement report and the measurement result(s) measured by the user terminal.

8. The method according to claim 1, wherein the determining the uplink random access resource according to the downlink receiving beam and sending the random access signal on the uplink random access resource comprises:
in the case that one downlink receiving beam is selected, selecting a latest random access resource from random access resources corresponding to the downlink receiving beam to start to send a random access signal; or
in the case that two downlink receiving beams are selected, the sending the random access signal on the uplink random access resource comprises any one of:
selecting a latest random access resource from all uplink random access resources corresponding to the selected downlink receiving beams to start to send a random access signal;
selecting all detected downlink receiving beams from the selected downlink receiving beams, and selecting a latest random access resource from all uplink random access resources corresponding to all the detected downlink receiving beams to start to send a random access signal;
selecting a first detected downlink receiving beam from the selected downlink receiving beams, and selecting a latest random access resource from all uplink random access resources corresponding to the first detected downlink receiving beam to start to send a random access signal;
selecting, for a Random Access Channel (RACH) procedure of sending repetitive Physical Random Access Channels (PRACHs), the downlink receiving beam with a shortest repetition time interval from the selected downlink receiving beams, and selecting a latest random access resource from all uplink random access resources corresponding to the downlink receiving beam to start to send a random access signal;
selecting, for a RACH procedure of sending repetitive PRACHs, the downlink receiving beam with a shortest total PRACH transmitting time length from the selected downlink receiving beams, and selecting a latest random access resource from all uplink random access resources corresponding to the downlink receiving beam to start to send a random access signal;
for a RACH procedure of sending repetitive PRACHs, selecting all detected downlink receiving beams from the selected downlink receiving beams, and further selecting the downlink receiving beam with a shortest repetition time interval from the detected downlink receiving beams, and selecting a latest random access resource from all uplink random access resources corresponding to the downlink receiving beam to start to send a random access signal; and
for a RACH procedure of sending repetitive PRACHs, selecting all detected downlink receiving beams from the selected downlink receiving beams, and further selecting the downlink receiving beam with a shortest total PRACH transmitting time length from the detected downlink receiving beams, and selecting a latest random access resource from all uplink random access resources corresponding to the downlink receiving beam to start to send a random access signal.

9. A user terminal, comprising:
a selecting module, configured to select a downlink receiving beam for random access according to a downlink receiving beam selecting rule;
a receiving module, configured to determine an uplink random access resource according to the downlink receiving beam, and send a random access signal on the uplink random access resource.

10. The user terminal according to claim 9, wherein the downlink receiving beam selecting rule is configured by a network side or defined by a protocol.

11. The user terminal according to claim 9, wherein the downlink receiving beam selecting rule comprises any one or a combination of:
a type of a measurement result to compare a signal quality;
selecting a beam with a best signal quality in a configured downlink receiving beam, according to a result reported through a measurement;
selecting a beam with a best signal quality in a configured downlink receiving beam, according to a measurement result measured by a user terminal.

12. The user terminal according to claim 11, wherein the type of the measurement result to compare the signal quality comprises any one or a combination of:
reference symbol received power of all measurement results;
reference signal received qualities of all measurement results;
reference symbol received power of a synchronous signal block;
a reference signal received quality of a synchronous signal block;
reference symbol received power of a channel state information reference signal block; and
a reference signal received quality of a channel state information reference signal block.

13. The user terminal according to claim 12, wherein the selecting module is further configured to select the downlink receiving beam by any one or a combination of:
in the case that the downlink receiving beam selecting rule comprises the result reported through the measurement report, selecting the beam with the best signal quality in the configured downlink receiving beam, and in the case that the type of the measurement result to compare the signal quality in the downlink receiving beam selecting rule comprises the reference symbol received power of the synchronous signal block, the downlink receiving beam comprising a downlink receiving beam with best reference symbol received power of the synchronous signal block in the result reported through the measurement report;
in the case that the downlink receiving beam selecting rule comprises the result reported through the measurement report, selecting the beam with the best signal quality in the configured downlink receiving beam, and in the case that the type of the measurement result to compare the signal quality in the downlink receiving beam selecting rule comprises the reference signal received quality of the synchronous signal block, the downlink receiving beam comprising a downlink receiving beam with a best reference signal received quality of the synchronous signal block in the result reported through the measurement report;
in the case that the downlink receiving beam selecting rule comprises the result reported through the measurement report, selecting the beam with the best signal quality in the configured downlink receiving beam, and in the case that the type of the measurement result to compare the signal quality in the downlink receiving beam selecting rule comprises the reference symbol received power of the channel state information reference signal block, the downlink receiving beam comprising a downlink receiving beam with best reference symbol received power of the channel state information reference signal block in the result reported through the measurement report;
in the case that the downlink receiving beam selecting rule comprises the result reported through the measurement report, selecting the beam with the best signal quality in the configured downlink receiving beam, and in the case that the type of the measurement result to compare the signal quality in the downlink receiving beam selecting rule comprises the reference signal received quality of the channel state information reference signal block, the downlink receiving beam comprising a downlink receiving beam with a best reference signal received quality of the channel state information reference signal block in the result reported through the measurement report.

14. The user terminal according to claim 12, wherein the selecting module is further configured to select the downlink receiving beam by any one or a combination of:
in the case that the downlink receiving beam selecting rule comprises the measurement result measured by the user terminal, selecting the beam with the best signal quality in the configured downlink receiving beam, and in the case that the type of the measurement result to compare the signal quality in the downlink receiving beam selecting rule comprises the reference symbol received power of the synchronous signal block, the downlink receiving beam comprising a downlink receiving beam with best reference symbol received power of the synchronous signal block in the measurement result measured by the user terminal;
in the case that the downlink receiving beam selecting rule comprises the measurement result measured by the user terminal, selecting the beam with the best signal quality in the configured downlink receiving beam, and in the case that the type of the measurement result to compare the signal quality in the downlink receiving beam selecting rule comprises the reference signal received quality of the synchronous signal block, the downlink receiving beam comprising a downlink receiving beam with a best reference signal received quality of the synchronous signal block in the measurement result measured by the user terminal;
in the case that the downlink receiving beam selecting rule comprises the measurement result measured by the user terminal, selecting the beam with the best signal quality in the configured downlink receiving beam, and in the case that the type of the measurement result to compare the signal quality in the downlink receiving beam selecting rule comprises the reference symbol received power of the channel state information reference signal block, the downlink receiving beam comprising a downlink receiving beam with best reference symbol received power of the channel state information reference signal block in the measurement result measured by the user terminal;
in the case that the downlink receiving beam selecting rule comprises the measurement result measured by the user terminal, selecting the beam with the best signal quality in the configured downlink receiving beam, and in the case that the type of the measurement result to compare the signal quality in the downlink receiving beam selecting rule comprises the reference signal received quality of the channel state information reference signal block, the downlink receiving beam comprising a downlink receiving beam with a best reference signal received quality of the channel state information reference signal block in the measurement result measured by the user terminal.

15. The user terminal according to claim 12, wherein the selecting module is further configured to select the downlink receiving beam by any one or a combination of:
in the case that the downlink receiving beam selecting rule comprises the result reported through the measurement report and the measurement result measured by the user terminal, selecting the beam with the best signal quality in the configured downlink receiving beam, and in the case that the type of the measurement result to compare the signal quality in the downlink receiving beam selecting rule comprises the reference symbol received power of the synchronous signal block, the downlink receiving beam comprising a downlink receiving beam with best reference symbol received power of the synchronous signal block in the result reported through the measurement report and the measurement result measured by the user terminal;
in the case that the downlink receiving beam selecting rule comprises the result reported through the measurement report and the measurement result measured by the user terminal, selecting the beam with the best signal quality in the configured downlink receiving beam, and in the case that the type of the measurement result to compare the signal quality in the downlink receiving beam selecting rule comprises the reference signal received quality of the synchronous signal block, the downlink receiving beam comprising a downlink receiving beam with a best reference signal received quality of the synchronous signal block in the result reported through the measurement report and the measurement result measured by the user terminal;
in the case that the downlink receiving beam selecting rule comprises the result reported through the measurement report and the measurement result measured by the user terminal, selecting the beam with the best signal quality in the configured downlink receiving beam, and in the case that the type of the measurement result to compare the signal quality in the downlink receiving beam selecting rule comprises the reference symbol received power of the channel state information reference signal block, the downlink receiving beam comprising a downlink receiving beam with best reference symbol received power of the channel state information reference signal block in the result reported through the measurement report and the measurement result measured by the user terminal;
in the case that the downlink receiving beam selecting rule comprises the result reported through the measurement report and the measurement result measured by the user terminal, selecting the beam with the best signal quality in the configured downlink receiving beam, and in the case that the type of the measurement result to compare the signal quality in the downlink receiving beam selecting rule comprises the reference signal received quality of the channel state information reference signal block, the downlink receiving beam comprising a downlink receiving beam with a best reference signal received quality of the channel state information reference signal block in the result reported through the measurement report and the measurement result measured by the user terminal.

16. The user terminal according to claim 9, wherein the determining module is further configured to:
in the case that one downlink receiving beam is selected, select a latest random access resource from random access resources corresponding to the downlink receiving beam to start to send a random access signal; or
in the case that two downlink receiving beams are selected, the sending the random access signal on the uplink random access resource comprises any one of:
selecting a latest random access resource from all uplink random access resources corresponding to the selected downlink receiving beams to start to send a random access signal;
selecting all detected downlink receiving beams from the selected downlink receiving beams, and selecting a latest random access resource from all uplink random access resources corresponding to all the detected downlink receiving beams to start to send a random access signal;
selecting a first detected downlink receiving beam from the selected downlink receiving beams, and selecting a latest random access resource from all uplink random access resources corresponding to the first detected downlink receiving beam to start to send a random access signal;
selecting, for a Random Access Channel (RACH) procedure of sending repetitive Physical Random Access Channels (PRACHs), the downlink receiving beam with a shortest repetition time interval from the selected downlink receiving beams, and selecting a latest random access resource from all uplink random access resources corresponding to the downlink receiving beam to start to send a random access signal;
selecting, for a RACH procedure of sending repetitive PRACHs, the downlink receiving beam with a shortest total PRACH transmitting time length from the selected downlink receiving beams, and selecting a latest random access resource from all uplink random access resources corresponding to the downlink receiving beam to start to send a random access signal;
for a RACH procedure of sending repetitive PRACHs, selecting all detected downlink receiving beams from the selected downlink receiving beams, and further selecting the downlink receiving beam with a shortest repetition time interval from the detected downlink receiving beams, and selecting a latest random access resource from all uplink random access resources corresponding to the downlink receiving beam to start to send a random access signal; and
for a RACH procedure of sending repetitive PRACHs, selecting all detected downlink receiving beams from the selected downlink receiving beams, and further selecting the downlink receiving beam with a shortest total PRACH transmitting time length from the detected downlink receiving beams, and selecting a latest random access resource from all uplink random access resources corresponding to the downlink receiving beam to start to send a random access signal.

17. A user terminal, comprising: a processor, a memory and a random access method program stored in the memory and executable on the processor, wherein the random access method program is executed by the processor to perform the random access method according to any one of claims 1 to 8.

18. A computer-readable storage medium, wherein a random access method program is stored in the computer-readable storage medium, and the random access method program is executed by a processor to perform the random access method according to any one of claims 1 to 8.
